# EUROPÄISCHE PATENTSCHRIFT

(11) **EP 2 540 154 B1**
(45) Veröffentlichungstag und Bekanntmachung des Hinweises auf die Patenterteilung: **13.11.2013**
(21) Anmeldenummer: 12000307.4
(22) Anmeldetag: 19.01.2012
(51) Int. Cl.: A01G 17/14

(54) **Weinbergpfahl mit wenigstens einem Querausleger**
Vineyard post with at least one cross-arm
Piquet de vigne doté d'au moins un bras transversal

(30) Priorität: 28.06.2011 DE 102011106730
(43) Veröffentlichungstag der Anmeldung: 02.01.2013
(73) Patentinhaber: Dr. Reisacher Winzerbedarf GmbH, 73765 Neuhausen (DE)
(72) Erfinder: Reisacher, Raimund, Dr. Ing., 76887 Bad Bergzabern (DE)
(74) Vertreter: Kesselhut, Wolf

(56) Entgegenhaltungen:
- EP-A1- 1 661 451
- CH-A5- 620 334
- DE-U1-202008 000 887
- US-B1- 6 434 883

## Beschreibung

Die Erfindung betrifft einen Weinbergpfahl mit wenigstens einem Querausleger gemäß dem Oberbegriff von Anspruch 1.

Zum Spannen von Spalierdrähten im Wein- und Obstbau werden bekanntermaßen offene oder geschlossene Metallprofile verwendet, die an den Schenkeln außenliegende Haken aufweisen, welche durch Ausstanzen und Formbiegen von zungenförmigen Abschnitten aus dem Grundmaterial gebildet werden. Derartige Metallprofile - die nachfolgend auch als Weinbergpfähle bezeichnet werden - sind beispielsweise aus der DE 44 36 936 C2 bekannt.

Die Drähte sind im Falle von einfachen Weinbergpfählen beiderseits der Rebpflanzen übereinander in zwei parallel zueinander verlaufenden vertikalen Ebenen aufgespannt, deren Abstand zueinander durch den Abstand der Schenkel der Metallprofile definiert wird.

Mitunter ist es jedoch wünschenswert, die Drähte in mehr als lediglich zwei parallel zueinander verlaufenden Ebenen, beispielsweise in acht oder 10 Ebenen, aufzuspannen, um beispielsweise den Bewuchs mit Rebpflanzen pro Flächeneinheit zu erhöhen oder um die Abschattung zu verbessern.

Um diesem Wunsch zu entsprechen werden an den bekannten Weinbergpfählen Querausleger befestigt. Obgleich die Möglichkeit besteht, die Querträger bereits bei der Herstellung fest mit den vertikalen Pfählen durch Schweißen zu verbinden, werden diese in der Praxis zur besseren Handhabung und aus Platzgründen bei der Lagerung direkt mit den Pfählen verschraubt. Der zur Befestigung der Querausleger erforderliche Montagevorgang ist dabei jedoch sehr zeitintensiv, da mehrere Einzelteile aufwändig miteinander verbunden werden müssen und ein Weinberg in der Regel mehrere 100 Pfähle umfasst.

Ein weiteres Problem besteht darin, dass die vorgenommenen Verschraubungen aufgrund der ständigen Windbewegungen, die über die Rebpflanzen auf die Drähte übertragen werden, sowie auch aufgrund der oftmals großen Temperaturschwankungen bei starker Sonneneinstrahlung dazu neigen, sich zu lösen. Demgemäß müssen die zuvor beschriebenen Weinbergpfähle mit Querauslegern entsprechend oft geprüft und gewartet werden, was mitunter sehr zeitaufwändig ist.

Ein weiteres Problem der zuvor beschriebenen Weinbergpfähle mit verschraubten Querauslegern besteht darin, dass die Querausleger im Abstand vom Trägheitszentrum an der die beiden Schenkel der Profile verbindenden Stirnseite angeschraubt werden. Durch diese dezentrale Befestigung der Querausleger muss der Pfahl neben der eigentlichen Tragkraft ein zusätzliches Drehmoment aufbringen, was die Schraubverbindung zusätzlich belastet und bei größeren Windlasten und mangelnder Wartung leicht zu einem Ausfall der Schraubverbindung zwischen Querausleger und vertikalem Profil führt.

Aus der US 6,434,883B1 ist ein gattungsgemäßer Pfahl zum Halten von Drähten im Weinund Obstbau bekannt, der einen Grundkörperin Form eines Hohlprofils aufweist, in welchem eine erste und eine zweite Öffnung vorgesehen sind, durch welche hindurch ein Querausleger im Wesentlichen im rechten Winkel zur Längsachse des Grundkörpers in diesen bis in eine Verriegelungsposition einschiebbar ist, in welcher zwischen dem Grundkörper und dem Querausleger eine formflüssige Verbindung durch einen Schnellverschluss erzeugt wird. Die Schrift gibt keinen Hinweis darauf, an den Armen des Querauslegers neben den Drahtaufnahmeöffnungen weitere Öffnungen vorzusehen, an denen Zubehörteile, wie z.B. Hagelnetze und Bewässerungsleitungen eingehängt oder montiert werden können.

Demgemäß ist es eine Aufgabe der vorliegenden Erfindung, einen Weinbergpfahl mit wenigstens einem Querausleger zu schaffen, der sich in platzsparender Weise lagern und in kürzester Zeit mit einfachen Mitteln montieren und auch demontieren lässt, und an den Zubehörteile, wie z.B. Hagelnetze und Bewässerungsleitungen einfach eingehängt und montiert werden können.

Diese Aufgabe wird erfindungsgemäß durch die Merkmale von Anspruch 1 gelöst.

Weitere Merkmale sind in den Unteransprüchen beschrieben.

Gemäß der Erfindung besitzt ein Pfahl zum Halten von Drähten im Wein- und Obstbau einen Grundkörper, der einen ersten und zweiten Schenkel aus Metallblech aufweist, an dem wenigstens ein im Wesentlichen im rechten Winkel zur Längsachse des Grundkörpers verlaufender Querausleger mit einer Vielzahl von Haken und/oder Ösen zum Halten der Drähte angeordnet ist. Der Grundkörper, der bei der bevorzugten Ausführungsform der Erfindung einen im Wesentlichen U-förmigen Querschnitt aufweist, sowie auch der Querausleger, werden bevorzugt durch Stanzen und Formbiegen von Metallblech erhalten, welches z.B. eine Stärke von 1,0 mm bis 3,5 mm besitzen kann.

Die Erfindung zeichnet sich dadurch aus, dass im ersten und im zweiten Schenkel des Profils des Grundkörpers jeweils eine Öffnung gebildet ist, die eine der Querschnittsform des Querauslegers angepasste Öffnungsform besitzt. Die Öffnungen, die beispielsweise rechteckig sind, fluchten hierbei in horizontaler Richtung, so dass der Querausleger durch die beiden Öffnungen hindurch im Wesentlichen im rechten Winkel zur Längsachse des Grundkörpers bis in eine Verriegelungsposition in diesen eingeschoben werden kann. Die Verriegelungsposition befindet sich dabei im Bereich der Mitte des Querauslegers, so dass sich nach dem Einschieben des Querauslegers eine kreuzförmige Konfiguration ergibt. Um den eingeschobenen Querausleger in der Verriegelungsposition am Grundkörper zu fixieren, ist weiterhin ein Schnellverschluss vorgesehen, der in der Verriegelungsposition eine formschlüssige Verbindung zwischen dem Grundkörper und dem Querausleger erzeugt, die bevorzugt von Hand oder auch mit Hilfe von einfachen Werkzeugen wieder lösbar ist.

Gemäß der Erfindung befinden sich auf dem Querausleger weitere Ausnehmungen und Elemente, an denen Zubehörteile, wie z.B. Hagelnetze und Bewässerungsleitungen, einfach eingehängt oder montiert werden können.

Durch die Erfindung ergibt sich der Vorteil, dass im Wesentlichen keine Zubehörteile zur Montage der erfindungsgemäßen Querausleger benötigt werden, so dass sich diese innerhalb kürzester Zeit in großer Stückzahl montieren lassen. Durch den Einsatz der in den Schenkeln des Grundkörpers geformten Öffnungen in Verbindung mit einem Schnellverschluss wird hierbei eine hohe Steifigkeit der zusammengesetzten Pfähle gegenüber auf die Querprofile wirkenden Drehmomenten erhalten, wodurch auch hohe Windlasten von den Pfählen problemlos aufgenommen werden können. Zudem eröffnet die erfindungsgemäße Lösung die Möglichkeit, dass die Grundkörper und Querausleger vor der Montage platzsparend gelagert und zu den Weinbergen transportiert werden können, wodurch sich die Lagerhaltungs- und Transportkosten gegenüber vorgefertigten Pfählen, bei denen die Grundkörper und Querprofile bereits bei der Herstellung fest miteinander verbunden werden, verringern. Zudem wird das Handling bei der Herstellung der erfindungsgemäßen Pfähle verbessert.

Nach einem weiteren der Erfindung zu Grunde liegenden Gedanken umfasst der Schnellverschluss einen am Querausleger vorgesehenen und in der Verriegelungsposition am Grundkörper anliegenden eigensteifen Anschlag sowie eine am Querausleger geformte federelastische Blechzunge, die zur Erzeugung der formschlüssigen Verbindung mit einer Rastaufnahme am Grundkörper zusammenwirkt. Hierdurch ergibt sich der Vorteil, dass der Querausleger beim Einschieben durch die beiden Öffnungen in den Schenkeln des Grundkörpers hindurch durch den eigensteifen Anschlag sozusagen automatisch in der Verriegelungsposition positioniert wird, wenn dieser an der Außenseite des zugehörigen Schenkels anliegt.

Bei der bevorzugten Ausführungsform der Erfindung besteht der Querausleger aus einem durch Stanzen und Formbiegen erzeugten Blechprofil, an dem die Haken geformt sind. Die federelastische Blechzunge wird in diesem Falle bevorzugt in gleicher Weise wie die Haken durch Ausstanzen und Formbiegen eines zungenförmigen Abschnitts aus dem Blechprofil des Querauslegers erzeugt, was zu einer erheblichen Vereinfachung des Herstellungsvorgangs führt. Hierbei ist es von besonderem Vorteil, wenn die federelastische Blechzunge - in gleicher Weise wie die Haken - einen aus dem Blechprofil des Querauslegers in einem Winkel von bevorzugt 80° herausspringenden Federabschnitt und einen im Wesentlichen parallel zur Außenseite des Blechprofils verlaufenden Stützabschnitt umfasst, an dessen freiem Ende eine Stützfläche geformt ist, über die sich der Querausleger in der Verriegelungsposition am Grundkörper abstützt. Der Stützabschnitt, der beispielsweise eine Länge von 0,5 cm bis 3,5 cm besitzen kann, weist bevorzugt einen gewölbten Querschnitt auf, um das Flächenträgheitsmomente - und damit die Steifigkeit desselben - zu vergrößern.

Durch die zuvor beschriebene Ausgestaltung der federelastischen Blechzungen ergibt sich der Vorteil, dass diese mit den gewünschten Elastizitätseigenschaften mit einer vergleichsweise hohen Präzision im selben Herstellungsprozess und mit denselben Werkzeugen wie die Querträger und/oder Grundkörper geformt werden können.

Die federelastischen Blechzungen besitzen jeweils bevorzugt eine sich vom Federabschnitt bis zur Stützfläche erstreckende Aufnahmeöffnung, in die insbesondere eine Keil einführbar ist, um in der Verriegelungsposition eine formsteife Verbindung zwischen dem Federabschnitt und dem Grundkörper zu erzeugen, bzw. um den Querträger in der Verriegelungsposition zusätzlich über eine durch den Keil bereitgestellte vergrößerte Anlagefläche am Grundkörper zu sichern. Diese Ausführungsform besitzt den Vorteil, dass der Keil automatisch durch die Schwerkraft gesichert wird und zudem die Angriffsfläche für die Schlagwerkzeuge von Erntemaschinen sehr gering ist, wodurch die Gefahr eines zufälligen Lösens der Keile beim Erntevorgang weiter verringert werden kann. Gegebenenfalls können die Keile nach dem Einführen in die jeweilige Aufnahmeöffnung, die nach außen hin durch den Stützabschnitt begrenzt wird, mit einem geeigneten Werkzeug, beispielsweise mit einer Zange, verbogen werden, um eine zusätzliche Sicherung zu erhalten.

Durch den Einsatz einer zwischen dem Stützabschnitt und der Außenseite des betreffenden Querprofils definierten Aufnahmeöffnung ergibt sich hierbei der Vorteil, dass die Keile zwischen dem Stützabschnitt und dem Querprofil zusätzlich verklemmt werden, wenn der lichte Abstand zwischen der Innenseite des Stützabschnitts und der Außenseite des Querprofils geringfügig, beispielsweise 0,5 mm, geringer ist, als die Materialstärke des Keils. Hierdurch ergibt sich eine zusätzliche Sicherung der Keile gegen ein unbeabsichtigtes Herausrutschen.

Obgleich die Möglichkeit besteht, den eigensteifen Anschlag durch einen in den Querträger eingeführt Bolzen bereitzustellen, der nach dem Einschieben des Querträgers in der Verriegelungsposition in eine entsprechend geformte Öffnung im Querträger eingeführt wird, die bevorzugt in horizontaler Richtung verläuft, ist der eigensteife Anschlag im Querträger bevorzugt als zungenförmiger Vorsprung ausgestaltet, der in gleicher Weise wie die Haken durch Stanzen und Herausbiegen eines im Wesentlichen geradlinigen zungenförmigen Abschnitts aus dem im gewissen Rahmen federelastischen Blechmaterial des Querauslegers erhalten wird. Der zungenförmige Abschnitt ist hierbei bevorzugt geradlinig und in einem Winkel von beispielsweise 10 - 30° gegenüber der Außenfläche des Querauslegers geneigt angeordnet, wobei das freie Ende des zungenförmigen Abschnitts beim Einschieben des Querauslegers in die Öffnungen im Grundkörper vom Grundkörper Weg weist. Hierdurch ergibt sich der Vorteil, dass der zungenförmige Abschnitt beim Einschieben des Querauslegers durch die beiden Öffnungen im Grundkörper hindurch beim Passieren der jeweiligen Ränder ersten und zweiten Öffnung entgegen seiner federelastischen Vorspannung in den Querausleger hinein zurückgedrückt wird. Beim Erreichen der Verriegelungsposition springt der zungenförmige Abschnitt dann selbstständig aus der Außenseite des Querauslegers heraus und liegt mit seinem freien Ende an der Außenseite des Grundkörpers an. Durch den zuvor genannten Winkelbereich wird hierbei sichergestellt, dass die Verformung des Blechmaterials des zungenförmigen Abschnitts einerseits im elastischen Bereich liegt, und andererseits die hohe Stauchfestigkeit des Blechmaterials in der Verriegelungsposition dazu genutzt wird, eine ausreichende Festigkeit des Anschlags zu gewährleisten.

Bei der zuletzt beschriebenen Ausführungsform der Erfindung ist in dem Bereich, in welchem das freie Ende des zungenförmigen Abschnitts an der Außenseite des jeweiligen Schenkels des Grundkörpers anliegt, bevorzugt eine nutartige Vertiefung, bevorzugt eine Sicke, geformt, welche in der Verriegelungsposition das freie Ende des zungenförmigen Abschnitts zusätzlich gegen eine laterale Bewegung sichert. Hierdurch können die Haltekräfte und die mechanische Belastbarkeit des in dieser Weise gebildeten Anschlags in vorteilhafter Weise weiter erhöht werden.

Alternativ besteht jedoch ebenfalls die Möglichkeit, den eigensteifen Anschlag als einen aus dem Blechmaterial des Querauslegers herausspringenden - im Querschnitt bevorzugt V-förmigen - Materialrücken auszugestalten, der insbesondere durch eine Kaltverformung des Blechmaterials, bzw. durch Einbringen eines Schlitzes und Herausdrücken des Blechmaterials, erhalten wird. Das Einschieben des Querauslegers durch die Öffnungen im Grundkörper hindurch erfolgt in diesem Falle bis an die aus dem Querausleger herausstehende V-förmige Querschnittsfläche des Materialrückens im Bereich des Schlitzes heran in entgegengesetzter Richtung zu dem federelastischen zungenförmigen Abschnitt der zuvor beschriebenen Ausführungsform. Zur Sicherung des Querauslegers in der Verriegelungsposition kann in diesem Falle ein Keil oder auch ein Bolzen eingesetzt werden, der auf der dem Materialrücken gegenüberliegenden Seite des Grundkörpers in eine entsprechende Öffnung im Querausleger eingeführt wird.

Die Keilöffnung ist bevorzugt eine sich in Richtung der Längsachse des Grundkörpers durch den Querausleger hindurch erstreckende Ausnehmung, die sich in der Verriegelungsposition bis über die Außenseite des Grundkörpers hinein erstreckt. Der Keil wird in diesem Falle seitlich in horizontaler Richtung in die Ausnehmung eingesteckt und liegt mit seiner einen Seite am Rand der Ausnehmung und mit seiner anderen Seite am Schenkel des Grundkörpers an.

Im Falle von Grundkörpern, die lediglich eine sehr schmale Profilform besitzen, ergibt sich der Vorteil, dass das schmale Profil des Grundkörpers durch den Keil zusätzlich noch einmal in Querrichtung abgestürzt und verspannt wird, wodurch sich die Knicksteifigkeit des Grundprofils weiter erhöht.

Bei einer bevorzugten Ausführungsform der Erfindung wird die Keilöffnung durch die Aufnahmeöffnung eines an der Oberseite des Querträgers geformten Hakens, beispielsweise eines innen liegenden Hakens mit einer geschlossenen oder auch zur Außenseite hin an einer Stelle geöffneten ösenförmigen Öffnung gebildet. In gleicher Weise kann die Keilöffnung auch der Drahtaufnahmeabschnitt eines aus dem Profil des Querauslegers heraus gebogenen zungenförmigen Hakens sein.

In der Praxis hat es sich als besonders vorteilhaft herausgestellt, wenn am Grundkörper des Profils eine erste, die Rastaufnahme für die federelastische Blechzunge bildende Sicke und/oder eine zweite, den eigensteifen Anschlag aufnehmende Sicke geformt sind, die sich bevorzugt über die gesamte Länge des Grundkörpers hinweg erstrecken. Die beiden Sicken werden bei der Produktion des Grundkörpers durch einen entsprechenden Präge- oder Profiliervorgang in die Schenkel des Grundkörpers eingebracht und verlaufen in Höhe des eigensteifen Anschlags, bzw. in Höhe der federelastischen Blechzunge. Durch das Vorsehen einer Sicke ergibt sich der Vorteil, dass die Stützfläche der federelastischen Blechzunge bzw. die Anschlagsfläche des eigensteifen Anschlags in der Sicke fixiert werden, so dass diese bei der Beaufschlagung des Querauslegers mit einem Drehmoment in ihrer Position verbleiben und nicht seitlich an der Außenseite der Schenkels entlangrutschen. Hierdurch erhöht sich das maximale Haltemoment, mit welchem der Querausleger beaufschlagt werden kann, noch einmal beachtlich.

Gemäß einer weiteren Ausführungsform der Erfindung sind im Mittenbereich des Querauslegers zwei große Ausnehmungen angebracht. Dies ermöglicht zum einen das Anschrauben der Querausleger in traditioneller Weise. Zum anderen kann in die nahe an der federelastischen Blechzunge liegende Ausnehmung von der offenen Seite des Grundprofils aus ein Hebelelement eingeführt werden, mit dem gegen die Öffnung des Schenkels des Grundprofils drückend der Querausleger verschoben und somit verschlossen bzw. geöffnet werden kann.

Gemäß einer weiteren Ausführungsform der Erfindung ist in der Stirnfläche des Grundkörpers in Höhe der Öffnungen zur Aufnahme des Querauslegers wenigstens eine weitere Öffnung geformt. Die weitere Öffnung ist so positioniert, dass diese in der Verriegelungsposition im Wesentlichen mit einer Ausnehmung im Querausleger in der Weise fluchtet, dass der Querausleger durch Einführen eines Hebelelements, beispielsweise eines Stabes oder einer Stange, von außen her relativ zum Grundkörper verschiebbar ist, um den Schnellverschluss zu schließen oder zu öffnen. Das Schließen, bzw. das Öffnen des Schnellverschlusses erfolgt im Falle der Ausführungsform mit einer federelastischen Blechzunge dadurch, dass der Querausleger durch horizontales Verschwenken der durch die weitere Öffnung in die Ausnehmung des Querauslegers eingeführten Stange solange gegen die von der federelastischen Blechzunge aufgebrachte Kraft verschoben wird, bis das freie Ende der im Wesentlichen geradlinig ausgebildeten Blechzunge des eigensteifen Anschlags aus der zugehörigen Stanzöffnung herausspringt und neben der Öffnung im Schenkel des Grundkörpers an dessen Außenfläche anliegt. Die zuletzt beschriebenen Ausführungsformen der Erfindung besitzten den Vorteil, dass sich die Querausleger in kürzester Zeit von einer Person allein an den Grundkörpern montieren lassen. Hierdurch können im Falle von Grundkörpern, die in bekannter Weise mit üblichen außen liegenden und auch innen liegenden Haken zur Aufnahme von Drähten an den beiden Schenkeln ausgerüstet sind, die Querausleger von einer Person allein in kürzester Zeit nachgerüstet werden. In gleicher Weise lassen sich die Querausleger bei der zuletzt beschriebenen Ausführungsform mithilfe der in die weitere Öffnung eingeführten Stange mit sehr geringem Aufwand gewünschten Falls wieder lösen und demontieren.

Die Erfindung wird nachfolgend mit Bezug auf die Zeichnungen anhand von bevorzugten Ausführungsformen beschrieben.

In den Zeichnungen zeigen:
- Fig. 1: eine schematische räumliche Seitenansicht eines erfindungsgemäßen Pfahls mit montiertem Querausleger zur Veranschaulichung der Anlage der federelastischen Blechzunge am Schenkel des Grundkörpers,
- Fig. 2: eine schematische räumliche Seitenansicht der gegenüberliegenden Seite des Pfahls von Fig. 1 zur Veranschaulichung der Anlage des eigensteifen Anschlags am Schenkel des Grundkörpers,
- Fig. 3: eine Querschnittsansicht einer weiteren Ausführungsform eines erfindungsgemäßen Pfahls, bei welchem der Querausleger durch einen in horizontaler Richtung in eine Aufnahmeöffnung der federelastischen Blechzunge eingeschobenen Keil gesichert wird,
- Fig. 4: eine Frontansicht des Pfahls von Fig. 3,
- Fig. 5: eine Aufsicht auf den Pfahl von Fig. 3,
- Fig. 6: eine Frontansicht einer weiteren Ausführungsform eines erfindungsgemäßen Pfahls, bei welchem der Schnellverschlusses einen in horizontaler Richtung in einer entsprechenden Öffnung im Querausleger aufgenommenen Bolzen und einen horizontalen Keil umfasst,
- Fig. 7: eine Aufsicht auf den Pfahl von Fig. 6,
- Fig. 8: eine Aufsicht auf eine abgewandelte Ausführungsform des Pfahls von Figur 1, bei welcher in die Schenkel des Grundkörpers zusätzliche Sicken und in die Stirnfläche des Grundkörpers sowie in den Querträger Öffnungen zum Einführen eines Hebelelements eingebracht sind, und
- Fig. 9: eine Aufsicht auf den Pfahl von Fig. 8.

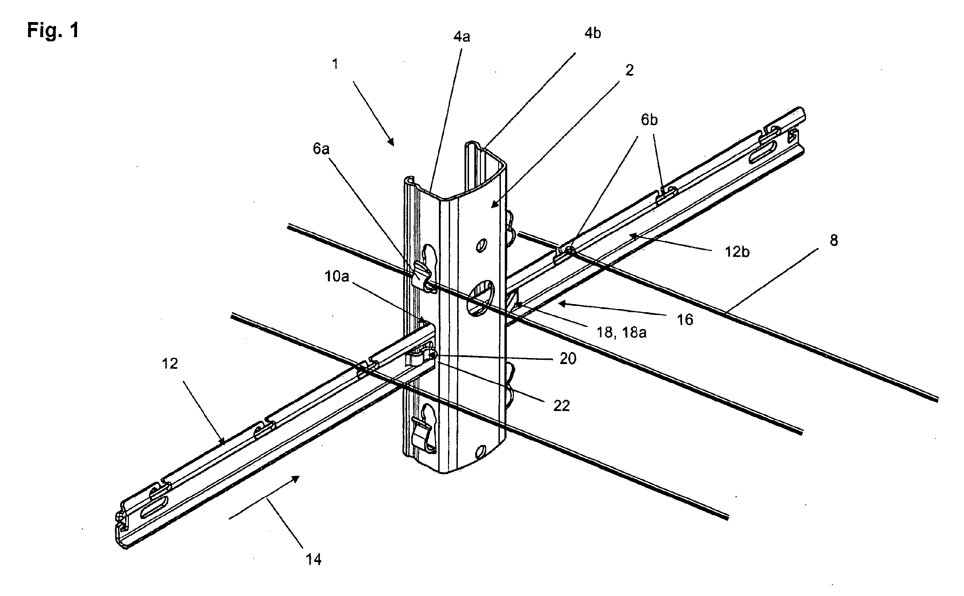

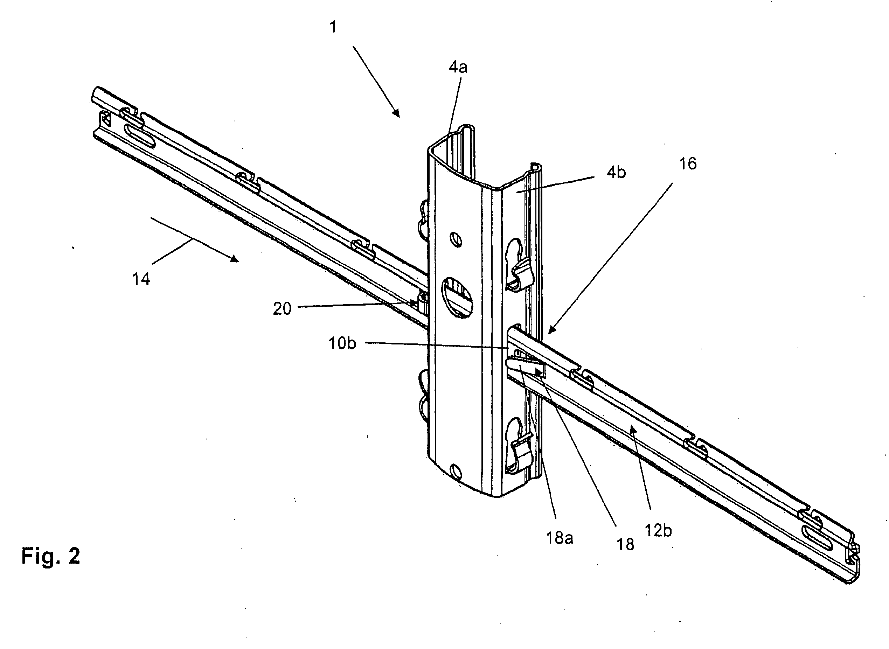

Wie in Fig. 1 und 2 gezeigt ist, umfasst ein erfindungsgemäßer Pfahl 1 einen aus Metallblech, insbesondere aus Stahlblech, geformten Grundkörper 2, der einen im Wesentlichen U-förmigen Querschnitt mit Schenkeln 4a, 4b aufweist, an denen erfindungsgemäße Haken 6a zur Aufnahme von Drähten 8 geformt sind. Im ersten und im zweiten Schenkel 4a, 4b ist jeweils eine Öffnung 10a, 10b geformt, durch die hindurch ein Querausleger 12 mit weiteren Haken 6b zur Aufnahme von weiteren Drähten 8 im Wesentlichen im rechten Winkel zur Längsachse des Grundkörpers 2 von der Seite her in Richtung des Pfeils 14 bis in die in den Figuren 1 und 2 gezeigte Verriegelungsposition eingeschoben werden kann. Das in den Figuren nicht gezeigte untere Ende des Grundkörpers 2 ist in bekannter Weise in das Erdreich eingesetzt. Soweit nachfolgend von Haken 6a, 6b gesprochen wird, soll dies ebenfalls auch geschlossene Ösen mit umfassen, durch die die Drähte 8 hindurch geführt werden. In den Figuren wird der Einfachheit halber jeweils nur ein Querausleger pro Grundprofil dargestellt. In der Praxis werden an einem Grundprofil zumeist mehrere Querausleger verschiedener Länge übereinander montiert.

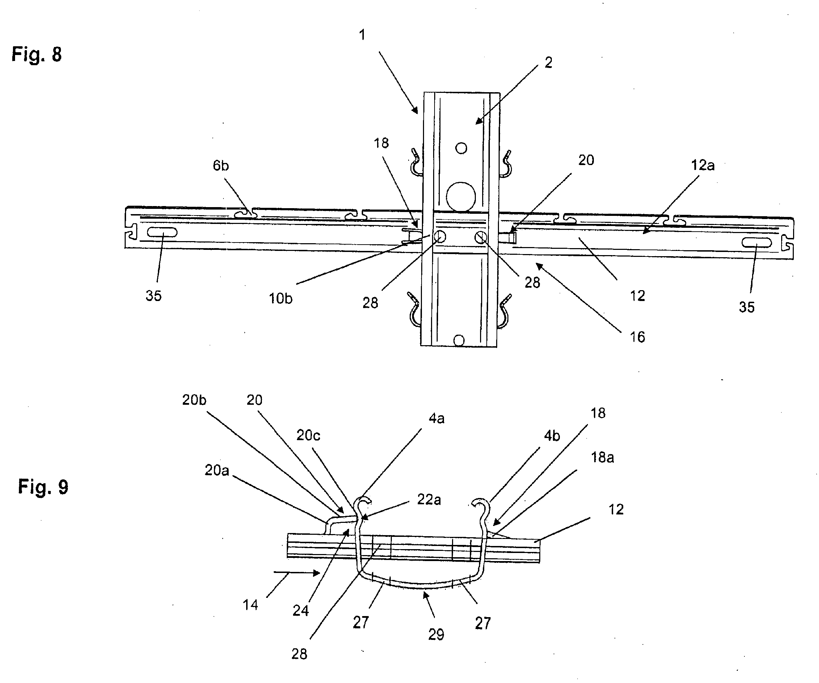

Auf den Armen des Querauslegers 12 sind weitere Ausnehmungen 35 zur Befestigung von Zubehör, wie z.B. Hagelnetzen und Bewässerungsleitungen angebracht (Fig.8).

Wie der Darstellung von Fig. 1 und 2 weiterhin entnommen werden kann, umfasst der erfindungsgemäße Pfahl 1 weiterhin einen Schnellverschlusses 16, der in der Verriegelungsposition eine formschlüssige Verbindung zwischen dem Grundkörper 2 und dem Querausleger 12 erzeugt, um den Querausleger 12 in der gezeigten Verriegelungsposition gegen ein Verdrehen in der horizontalen und in der vertikalen Ebene zu sichern.

Bei der in Fig. 2 dargestellten Ausführungsform der Erfindung umfasst der Schnellverschluss 16 einen am Querausleger 12 vorgesehenen und in der Verriegelungsposition am Grundkörper 2 anliegenden eigensteifen Anschlag 18 sowie eine am Querausleger 12 geformte federelastische Blechzunge 20, welche zur Erzeugung der formschlüssigen Verbindung mit einer Rastaufnahme 22 am Grundkörper 2 zusammenwirkt. Die Rastaufnahme 22 ist im einfachsten Falle die Außenfläche des zugehörigen Schenkels 4a oder 4b, kann jedoch auch als eine Sicke 22a ausgestaltet sein, wie sie im Detail in der Querschnittsansicht von Fig. 9 gezeigt ist.

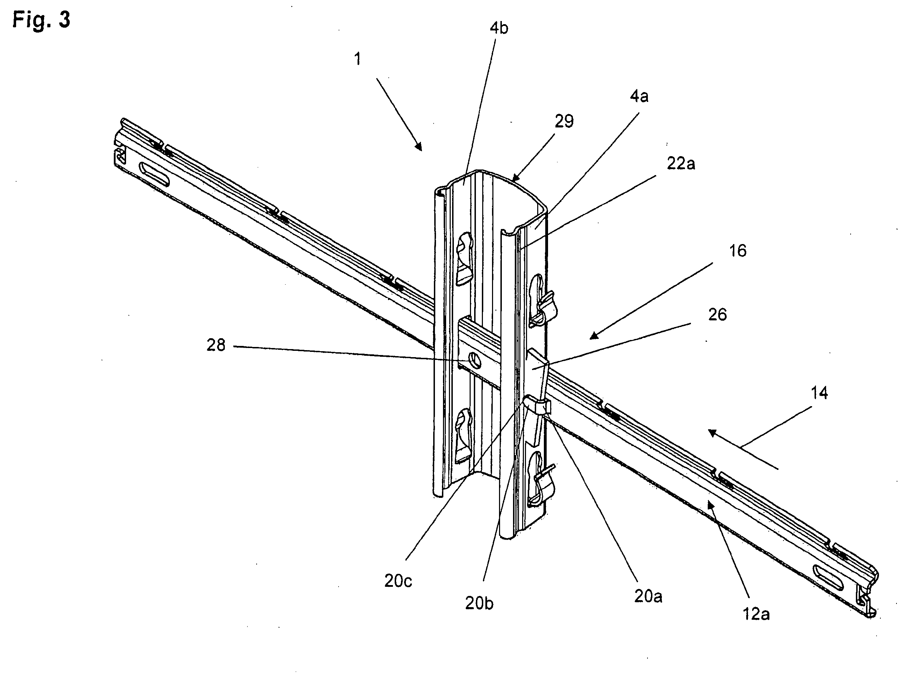

Wie der Darstellung von Fig. 1 sowie auch von Fig. 9 weiterhin im Detail entnommen werden kann, besitzt die federelastische Blechzunge 20 einen aus dem Blechprofil des Querauslegers 12 in einem Winkel von beispielsweise 80° herausspringenden Federabschnitt 20a und einen im Wesentlichen parallel zur Außenseite des Blechprofils verlaufenden Stützabschnitt 20b, an dessen freiem Ende eine Stützfläche 20c geformt ist, über die sich der Querausleger 12 in der Verriegelungsposition in der Rastaufnahme 22, bzw. der Sicke 22a am Grundkörper abstützt. Die federelastische Blechzunge 20 bildet aufgrund ihrer Querschnittsform eine in Fig. 9 gezeigte Aufnahmeöffnung 24, die sich vom Federabschnitt 20a bis zur Stützfläche 20c erstreckt, und in die gewünschten Falls ein Keil 26 zu zusätzlichen Sicherung des Querauslegers 12 in der Verriegelungsposition einführbar ist, wie dies in Fig. 3, 4 und 5 gezeigt ist.

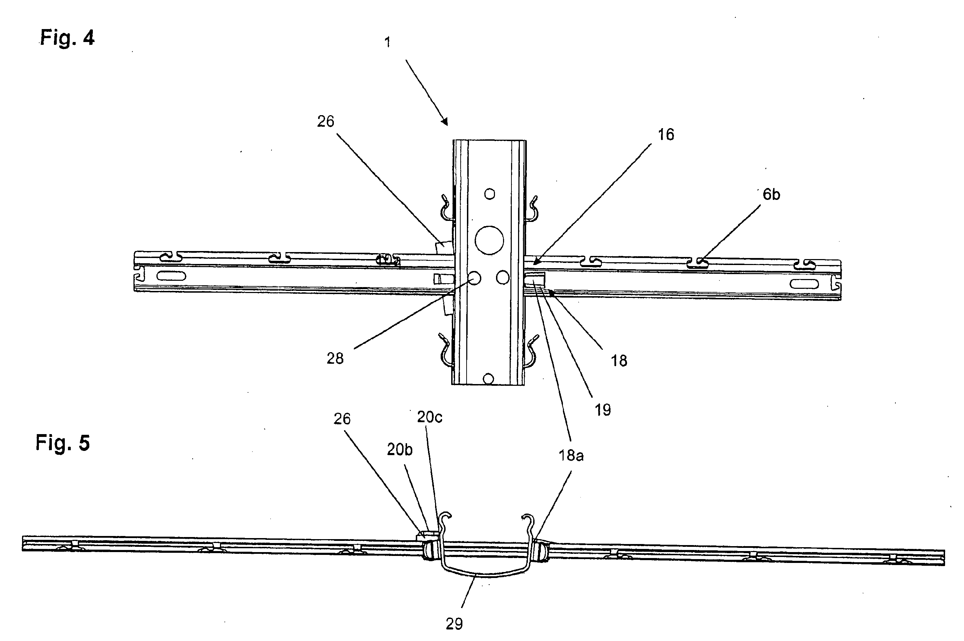

Bei der in den Figuren 1 bis 5 sowie auch 8 und 9 gezeigten Ausführungsform der Erfindung wird der eigensteife Anschlag 18 durch einen am Querausleger 12 ausgeformten zungenförmigen Vorsprung 18a gebildet, der sich in einem Winkel von beispielsweise 20 ° oder auch mehr aus der Außenfläche 12a oder der Innenfläche 12b des Profils des Querauslegers 12 heraus erstreckt, wie dies in den zuvor genannten Figuren gezeigt ist. Der Winkel des eigenschaftssteifen Anschlags 18 und die Länge des zungenförmigen Vorsprungs 18a sind dabei so gewählt, dass der zungenförmige Vorsprung 18a beim Einschieben des Querauslegers 12 durch die Öffnungen 10a, 10b in Richtung des Pfeils 14 in die Stanzöffnung 19 im Profil des Querauslegers 12 zurück gedrückt wird. Erst beim Erreichen der endgültigen Verriegelungsposition springt das freie Ende des zungenförmigen Vorsprungs 18a aufgrund der elastischen Materialeigenschaften des verwendeten Stahlblechs aus der Stanzöffnung 19 (Fig. 4) heraus und erstreckt sich im zuvor genannten Winkel schräg bis an den zweiten Schenkel 4b heran. Da in dieser Stellung des zungenförmigen Vorsprungs 18a ein Zurückschieben des Querauslegers 12 entgegengesetzt zur Pfeilrichtung 14 nur dann möglich ist, wenn der Vorsprung 18a in die zugehörige Stanzöffnung 19 im Querausleger 12 hinein zurück gedrückt wird, bildet der zungenförmige Vorsprung einen eigcnstcifen Anschlag 18, der beim Einschieben des Querauslegers 12 sozusagen automatisch aktiviert wird.

Wie der Darstellung von Fig. 8 und 9 weiterhin entnommen werden kann, kann in der Stirnseite 29 des Grundkörpers 2 eine oder mehrere Öffnungen 27 geformt sein, die in der Verriegelungsposition zu einer entsprechenden Ausnehmung 28 im Querprofil 12 korrespondiert, und durch die hindurch das Ende einer nicht näher gezeigten Hebelstange einführbar ist, um den Querausleger 12 entgegen der federelastischen Kraft des Federabschnitts 20a in Richtung des Pfeils 14 über die Verriegelungsposition hinaus zu verschieben und hierdurch ein Herausspringen des zungenförmigen Vorsprungs 18a aus der Außenfläche 12a zu ermöglichen. Alternativ kann eine nicht näher gezeigte Hebelstange vom offenen Profilmaul des Grundkörpers her in eine entsprechende Ausnehmung 28 eingeführt und gegen einen Profilschenkel 4a oder 4b abgedrückt werden. Wenn der Abstand zwischen der Stützfläche 20c und der Anlagefläche des Vorsprungs 18a geringfügig kleiner ist als der Abstand zwischen der Rastaufnahme 22 und der Anlagefläche am zweiten Schenkel 4b, an welcher das freie Ende des zungenförmigen Vorsprungs 18a am zweiten Schenkel anliegt, wird der Querausleger zwischen den Zungen elastisch verspannt. Ist dieser Abstandsunterschied geringfügig größer, so lässt sich der Querausleger mit leichtem Spiel leicht in das Grundprofil einschieben und verrasten.

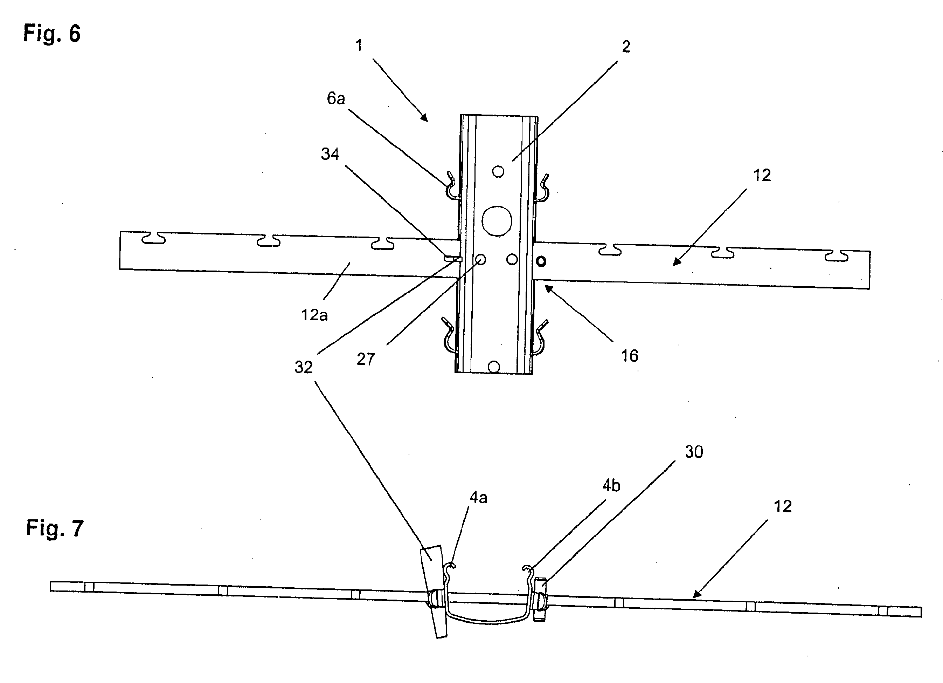

Alternativ besteht die Möglichkeit, den eigensteifen Anschlag als Bolzen 30 auszugestalten, welcher in horizontaler Richtung in eine entsprechende Öffnung im Profil des Querauslegers 12 eingesteckt ist, wie dies in den Figuren 6 und 7 gezeigt ist. Die Sicherung und dass Verspannen des Querauslegers 12 mit dem Grundkörper 2 erfolgt hierbei bevorzugt durch einen Keil 32, der in eine horizontal verlaufende Öffnung 34 im Querprofil 12 eingetrieben wird.

### Liste der Bezugszeichen

- 1: Pfahl
- 2: Grundkörper
- 4a: erster Schenkel
- 4b: zweiter Schenkel
- 6a: Haken am Grundkörper
- 6b: Haken am Querausleger
- 8: Draht
- 10a: Öffnung im ersten Schenkel
- 10b: Öffnung im zweiten Schenkel
- 12: Querausleger
- 12a: Außenfläche des Querprofils
- 12b: Innenfläche des Querprofils
- 14: Pfeil
- 16: Schnellverschluss
- 18: eigensteifer Anschlag
- 18a: zungenförmiger Vorsprung
- 19: Stanzöffnung des eigensteifen Anschlags
- 20: Federelastische Blechzunge
- 20a: Federabschnitt
- 20b: Stützabschnitt
- 20c: Stützfläche
- 22: Rastaufnhame
- 22a: Sicke
- 24: Aufnahmeöffnung
- 26: Keil
- 27: Ausnehmung(en) in Stirnseite des Grundkörpers
- 28: Ausnehmung(en) in Mittenbereich des Querprofils
- 29: Stirnseite des Grundkörpers
- 30: Bolzen
- 32: Keil
- 34: horizontale Öffnung
- 35: Ausnehmungen an den Tragarmen des Querprofils

## Patentansprüche

1. Pfahl (1) zum Halten von Drähten (8) im Wein- und Obstbau, der einen Grundkörper (2) mit einem ersten und zweiten Schenkel (4a, 4b) aus Metallblech aufweist, an dem wenigstens ein im Wesentlichen im rechten Winkel zur Längsachse des Grundkörpers (2) verlaufender Querausleger (12) mit einer Vielzahl von Haken (6a, 6b) zum Halten der Drähte (8) angeordnet ist, wobei im ersten und im zweiten Schenkel (4a, 4b) jeweils eine Öffnung (10a, 10b) mit einer der Querschnittsform des Querauslegers (12) angepassten Öffnungsform gebildet ist, durch welche hindurch der Querausleger (12) im Wesentlichen im rechten Winkel zur Längsachse des Grundkörpers (2) in diesen bis in eine Verriegelungsposition einschiebbar ist, und wobei ein Schnellverschluss (16) vorgesehen ist, welcher in der Verriegelungsposition eine formschlüssige Verbindung zwischen dem Grundkörper (2) und dem Querausleger (12) erzeugt,
**dadurch gekennzeichnet,**
**dass** auf den Armen des Querauslegers weitere Ausnehmungen (35) zur Befestigung von Zubehör angebracht sind.

2. Pfahl nach Anspruch 1,
**dadurch gekennzeichnet,**
**dass** der Schnellverschluss einen am Querausleger (12) vorgesehenen und in der Verriegelungsposition am Grundkörper (2) anliegenden eigensteifen Anschlag (18) sowie eine am Querausleger (12) geformte federelastische Blechzunge (20) umfasst, welche zur Erzeugung der formschlüssigen Verbindung mit einer Rastaufnahme (22) am Grundkörper (2) zusammenwirkt, um den Querausleger (12) in der Verriegelungsposition gegen eine Bewegung relativ zum Grundkörper (2) zu sichern.

3. Pfahl nach Anspruch 2,
**dadurch gekennzeichnet,**
**dass** der Querausleger (12) aus einem Blechprofil besteht, an dem die Haken oder Ösen (6b) geformt sind, und dass die federelastische Blechzunge (20) durch Ausstanzen und Formbiegen eines zungenförmigen Abschnitts aus dem Blechprofil des Querauslegers (12) erzeugt wird.

4. Pfahl nach Anspruch 3,
**dadurch gekennzeichnet,**
**dass** die federelastische Blechzunge (20) einen aus dem Blechprofil des Querauslegers in einem Winkel von bevorzugt 80° herausspringenden Federabschnitt (20a) und einen im Wesentlichen parallel zur Außenseite (12a) des Querauslegers verlaufenden Stützabschnitt (20b) umfasst, an dessen freiem Ende eine Stützfläche (20c) geformt ist, über die sich der Querausleger (12) in der Verriegelungsposition am Grundkörper (2) abstützt.

5. Pfahl nach Anspruch 4,
**dadurch gekennzeichnet,**
**dass** die federelastische Blechzunge (20) eine sich vom Federabschnitt (20a) bis zur Stützfläche (20c) erstreckende Aufnahmeöffnung (24) umfasst, in die insbesondere eine Keil (26) einführbar ist, um in der Verriegelungsposition eine formsteife Verbindung zwischen dem Federabschnitt (20a) und dem Grundkörper (2) zu erzeugen.

6. Pfahl nach einem der Ansprüche 2 bis 5,
**dadurch gekennzeichnet,**
**dass** der eigensteife Anschlag einen im Querträger aufgenommenen Bolzen (30) oder einen am Querträger ausgeformten zungenförmigen Vorsprung (18a) oder einen aus dem Material des Querträgers durch Kaltverformen herausgedrückten Materialrücken umfasst.

7. Pfahl nach einem der vorhergehenden Ansprüche,
**dadurch gekennzeichnet,**
**dass** der Schnellverschluss (16) einen zwischen dem Grundkörper (2) und dem Querausleger (12) wirkenden Keil (26, 32) umfasst, der in eine am Querausleger vorgesehene Keilöffnung (24, 34) einführbar ist.

8. Pfahl nach Anspruch 7,
**dadurch gekennzeichnet,**
**dass** die Keilöffnung eine am Querausleger (12) geformte, sich in Richtung der Längsachse des Grundkörpers (2) erstreckende Ausnehmung (24) umfasst, welche sich in der Verriegelungsposition bis an die Außenseite des Grundkörpers heran erstreckt, und in die der Keil (26) in vertikaler Richtung von oben her einführbar ist.

9. Pfahl nach Anspruch 7,
**dadurch gekennzeichnet,**
**dass** die Keilöffnung eine sich in Richtung senkrecht zur Längsachse des Grundkörpers (2) und senkrecht zur Längsachse des Querauslegers (12) durch den Querausleger hindurch erstreckende Ausnehmung (34) umfasst, welche sich in der Verriegelungsposition bis über die Außenseite des Grundkörpers (2) hinein erstreckt, und in die der Keil (32) in horizontaler Richtung einführbar ist.

10. Pfahl nach Anspruch 7,
**dadurch gekennzeichnet,**
**dass** die Keilöffnung (24) die Drahtaufnahmeöffnung eines an der Oberseite des Querauslegers (12) geformten weiteren Hakens (6b) ist.

11. Pfahl nach einem der Ansprüche 2 bis 10,
**dadurch gekennzeichnet,**
**dass** am Grundkörper (2) eine erste, die Rastaufnahme für die federelastische Blechzunge (20) bildende Sicke (22a) und/oder eine zweite, den eigensteifen Anschlag (18) aufnehmende Sicke geformt ist.

12. Pfahl nach einem der Ansprüche 1 bis 11,
**dadurch gekennzeichnet,**
**dass** im Mittenbereich des Querauslegers zwei Ausnehmungen (28) vorgesehen sind, die im verriegelten Zustand innerhalb des Profils nahe den Profilschenkeln 4a und 4b positioniert sind.

13. Pfahl nach einem der Ansprüche 1 bis 12,
**dadurch gekennzeichnet,**
**dass** in der Stirnseite (29) des Grundkörpers (2) in Höhe der Öffnungen (10a, 10b) zur Aufnahme des Querauslegers (12) wenigstens eine weitere Öffnung (27) geformt ist, die in der Verriegelungsposition im Wesentlichen mit einer Ausnehmung (28) im Querausleger (12) fluchtet, derart, dass der Querausleger (12) durch Einführen eines Hebelelements von außen her relativ zum Grundkörper (2) verschiebbar ist, um den Schnellverschluss (16) zu schließen oder zu öffnen.

## Claims

1. A post (1) for holding wires (8) in wine and fruit growing, comprising a base body (2) with a first and second leg (4a,4b) of sheet metal on which is arranged at least one transverse beam (12), running essentially at right angles to the longitudinal axis of the base body (2), with a multiplicity of hooks (6a, 6b) for holding the wires (8), wherein an opening (10a, 10b) is formed in both the first and second leg (4a, 4b) with an opening shape adapted to the cross-sectional shape of the transverse beam (12), through which the transverse beam (12) can be inserted essentially at right angles to the longitudinal axis of the base body (2) into the latter as far as a locking position, and wherein a quick-release fastener (16) is provided which in the locking position produces a positive connection between the base body (2) and the transverse beam (12), **characterised in that** further recesses (35) are formed on the arms of the transverse beam for fastening the accessories.

2. The post according to Claim 1, **characterised in that** the quick-release fastener comprises an inherently rigid stop (18) provided on the transverse beam (12) and resting on the base body (2) in the locking position, as well as a sheet metal tongue (20) shaped on the transverse beam (12), which tongue interacts with a detent receptacle (22) on the base body (2) to produce the positive connection in order to secure the transverse beam (12) in the locking position against a movement relatively to the base body (12).

3. The post according to Claim 2, **characterised in that** the transverse beam (12) consists of a sheet metal profile on which are formed the hooks or eyelets (6b), and **in that** the spring-elastic sheet metal tongue (20) is produced by stamping, forming and bending a tongue-shaped section from the sheet metal profile of the transverse beam (12).

4. The post according to Claim 3, **characterised in that** the spring-elastic sheet metal tongue (20) comprises a spring section (20a) that projects from the sheet metal profile of the transverse beam at an angle of preferably 80° and a support section (20b) running essentially parallel with the outside (12a) of the transverse beam, at the free end of which section is formed an support surface (20c) by means of which is supported the transverse beam (12) in the locking position on the base body (2).

5. The post according to Claim 4, **characterised in that** the spring-elastic sheet metal tongue (20) comprises a receiving opening (24) extending from the spring section (20a) to the support surface (20c), into which opening can be inserted, in particular, a wedge (26) in order to produce a dimensionally rigid connection between the spring section (20a) and the base body (2) in the locking position.

6. The post according to any one of claims 2 to 5, **characterised in that** the inherently rigid stop comprises a bolt (30) received in the transverse support or a tongue-shaped projection (18a) formed on the transverse support or a material back pressed out of the material of the transverse support by cold working.

7. The post according to any one of the preceding claims, **characterised in that** the quick-release closure (16) comprises a wedge (26, 32) acting between the base body (2) and the transverse beam (12), which wedge may be inserted into a wedge opening (24, 34) provided on the transverse beam.

8. The post according to Claim 7, **characterised in that** the wedge opening comprises a recess (24) formed on the transverse beam (12)and extending in the direction of the longitudinal axis of the base body (2), which recess extends in the locking position as far as the outside of the base body and into which the wedge (26) can be inserted in the vertical direction from above.

9. The post according to Claim 7, **characterised in that** the wedge opening comprises a recess (34) extending in the direction perpendicular to the longitudinal axis of the base body (2) and perpendicular to the longitudinal axis of the transverse beam (12) through the transverse beam, which recess extends in the locking position as far as the outside of the base body (2) and into which the wedge (32) can be inserted in the horizontal direction.

10. The post according to Claim 7, **characterised in that** the wedge opening (24) is the wire receiving opening of a further hook (6b) formed on the upper side of the transverse beam (12).

11. The post according to any one of Claims 2 to 10, **characterised in that** a first bead (22a) forming the detent receptacle for the spring-elastic sheet metal tongue (20), and/or a second bead receiving the inherently rigid stop (18) is/are formed on the base body (2).

12. The post according to any one of Claims 1 to 11, **characterised in that** in the central region of the transverse beam are provided two recesses (28) which, in the locked condition, are positioned inside the profile in the vicinity of the profile legs 4a and 4b.

13. The post according to any one of Claims 1 to 12, **characterised in that** at least one further opening (27) is formed in the end face (29) of the base body (2) at the height of the openings (10a, 10b) for receiving the transverse beam (12), which opening, in the locking position, lies essentially flush with a recess (28) in the transverse beam (12) in such a manner that the transverse beam (12) is displaceable from the outside relative to the base body (2) by the insertion of a lever element in order to close or open the quick-release closure (16).

## Revendications

1. Piquet (1) pour maintenir des fils (8) dans les domaines de la viticulture et de l'arboriculture fruitière, qui présente un corps de base (2) doté d'un premier et d'un second côté (4a, 4b) en tôle métallique, sur lequel est disposé au moins un bras transversal (12), essentiellement à angle droit par rapport à l'axe longitudinal du corps de base (2), comportant une pluralité de crochets (6a, 6b) pour maintenir les fils (8), dans lequel dans le premier et dans le second côté (4a, 4b) est respectivement formée une ouverture (10a, 10b) avec une forme d'ouverture adaptée à la forme en coupe transversale du bras transversal (12), à travers laquelle le bras transversal (12) peut être introduit dans le corps de base (2) jusqu'à une position de verrouillage essentiellement à angle droit par rapport à l'axe longitudinal du corps de base (2), et dans lequel un moyen de fermeture rapide (16) est prévu, qui génère en position de verrouillage une liaison par complémentarité de formes entre le corps de base (2) et le bras transversal (12),
**caractérisé en ce**
**que** sur les éléments longitudinaux du bras transversal (12) d'autres logements (35) sont aménagés pour la fixation d'accessoires.

2. Piquet selon la revendication 1,
**caractérisé en ce**
**que** le moyen de fermeture rapide comprend une butée (18) ayant une rigidité inhérente prévue sur le bras transversal (12) et reposant sur le corps de base (2) en position de verrouillage ainsi qu'une languette de tôle élastique (20) formée sur le bras transversal (12), qui coopère avec un logement d'arrêt par encliquetage (22) sur le corps de base (2) en vue de générer la liaison par complémentarité de formes, afin de protéger le bras transversal (12) en position de verrouillage contre un mouvement par rapport au corps de base (2).

3. Piquet selon la revendication 2,
**caractérisé en ce**
**que** le bras transversal (12) se compose d'un profilé en tôle, sur lequel sont formés les crochets ou oeillets (6b), et en ce que la languette de tôle élastique (20) est produite par découpage et formage et pliage d'une section en forme de languette provenant du profilé en tôle du bras transversal (12).

4. Piquet selon la revendication 3,
**caractérisé en ce**
**que** la languette de tôle élastique (20) comprend une section à ressort (20a) faisant saillie du profilé en tôle du bras transversal selon un angle de préférence de 80° et une section de support (20b) essentiellement parallèle au côté externe (12a) du bras transversal, section de support sur l'extrémité libre de laquelle est formée une surface de support (20c), sur laquelle s'appuie le bras transversal (12) en position de verrouillage sur le corps de base (2).

5. Piquet selon la revendication 4,
**caractérisé en ce**
**que** la languette de tôle élastique (20) comprend une ouverture de logement (24) qui s'étend depuis la section à ressort (20a) jusqu'à la surface de support (20c), ouverture dans laquelle peut notamment être introduite une cale (26), afin de générer en position de verrouillage une liaison rigide entre la section à ressort (20a) et le corps de base (2).

6. Piquet selon l'une des revendications 2 à 5,
**caractérisé en ce**
**que** la butée ayant une rigidité inhérente comprend une cheville (30) logée dans la traverse ou une saillie (18a) en forme de languette formée sur la traverse ou une crête de matériau extraite du matériau de la traverse par façonnage à froid.

7. Piquet selon l'une des revendications précédentes,
**caractérisé en ce**
**que** le moyen de fermeture rapide (16) comprend une cale (26, 32) agissant entre le corps de base (2) et le corps transversal (12), qui peut être introduite dans une ouverture à cale (24, 34) prévue sur le bras transversal.

8. Piquet selon la revendication 7,
**caractérisé en ce**
**que** l'ouverture à cale comprend un creux (24) formé sur le bras transversal (12) et s'étendant dans la direction de l'axe longitudinal du corps de base (2), lequel creux s'étire jusqu'au côté externe du corps de base en position de verrouillage et dans lequel la cale (26) peut être introduite par le haut dans la direction verticale.

9. Piquet selon la revendication 7,
**caractérisé en ce**
**que** l'ouverture à cale comprend un creux (34) s'étendant dans la direction perpendiculaire à l'axe longitudinal du corps de base (2) et perpendiculaire à l'axe longitudinal du bras transversal (12) à travers le bras transversal, lequel creux s'étend en position de verrouillage au-delà du côté externe du corps de base (2) et dans lequel la cale (32) peut être introduite par le haut dans la direction verticale.

10. Piquet selon la revendication 7,
**caractérisé en ce**
**que** l'ouverture à cale (24) est l'ouverture de logement pour fil d'un autre crochet (6b) formé sur le dessus du bras transversal (12).

11. Piquet selon l'une des revendications 2 à 10,
**caractérisé en ce**
**que** sur le corps de base (2) est formée une première rainure (22a) constituant le logement d'arrêt par encliquetage pour la languette de tôle élastique (20) et/ou une seconde rainure logeant la butée rigide (18).

12. Piquet selon l'une des revendications 1 à 11,
**caractérisé en ce**
**que** dans la zone centrale du bras transversal sont prévus deux creux (28) qui sont positionnés à l'état verrouillé à l'intérieur du profilé près des côtés de profilé 4a et 4b.

13. Piquet selon l'une des revendications 1 à 12,
**caractérisé en ce**
**que** dans le côté frontal (29) du corps de base (2) à hauteur des ouvertures (10a, 10b) est formée au moins une autre ouverture (27) pour loger le bras transversal (12), laquelle ouverture est essentiellement alignée avec un creux (28) dans le bras transversal (12) en position de verrouillage, de telle sorte que le bras transversal (12) est déplaçable par introduction d'un élément de levier depuis l'extérieur par rapport au corps de base (2), afin de fermer ou d'ouvrir le moyen de fermeture rapide (16).
